# EUROPEAN PATENT APPLICATION

(11) **EP 2 295 245 A1**
(43) Date of publication of application: **16.03.2011**
(21) Application number: 09170100.3
(22) Date of filing: 11.09.2009
(51) Int. Cl.: B32B 33/00, B44C 1/00, E04F 15/00, B32B 38/06, B32B 38/14

(54) **Lenticular plastic floor product and method for manufacturing it**

(71) Applicant: International Vinyl Company, 8580 Avelgem (BE)
(72) Inventor: Vermeulen, Stijn, 8700 Aarsele - Tielt (BE)
(74) Representative: Luys, Marie-José A.H.

(57) **Abstract**

A method for manufacturing a lenticular plastic floor product in a continuous way comprises the steps of providing a flexible substrate (1,2,6), applying a printing layer (7) on top of said substrate (1,2,6), printing a plurality of lenticular interlaced images (8) on top of said printing layer (7), applying a transparent coating (9) on top of said plurality of lenticular interlaced images (8), gelling the already applied layers and mechanically embossing at least part of the transparent coating to form a plurality of lenticular lenses (10) for at least a part of said plurality of lenticular images.

## Description

The present invention relates to a lenticular plastic floor product and a method for manufacturing a lenticular plastic floor product.

The present invention in particular relates to a process for manufacturing plastic floor coverings 'on roll', meaning floor coverings which are produced on rolls of tens or hundreds linear meter. Such plastic floor coverings often contain decorative patterns which imitate natural materials. The majority of the commercial market consists of private home flooring, and as such cost and production cost control play an important role in the market situation. On roll plastic floor coverings are known and have been produced for a long time. They are usually produced using one or more of the techniques of coating, calendaring or pressing.

A method of manufacturing a floor covering 'on roll' in one continuous process using a coating technique is for instance described in US-A-2004/0102120. With a continuous process is meant that, for each of the steps of the method, a subsequent step of the method builds on the product realized in the previous step. The different steps of a continuous process may however be performed one after the other in one processing line or in different processing lines. The coating process described in US-A-2004/0102120 is a continuous process because the layers are applied on top of or beneath the product obtained in the previous step, i.e. each step builds on the product obtained in the previous step. In a first step of the method described in US-A-2004/0102120 a substrate is produced by impregnating a textile material with a suitable plastisol composition. Once the substrate is produced, one or more suitable top layers are added on top of the substrate providing the floor covering with suitable decorative and wear-and-tear characteristics. Those top layers may comprise, as an example, a foam layer coated on top of the substrate, a decorative pattern printed on the foam layer and a finishing wear layer coated on the decorative pattern. Usually, a backing sheet is applied on the back of the substrate to provide the floor covering with additional comfort and/or insulation. In a final step, all layers are gelled together by thermal treatment in an oven. The top coatings applied on top of the substrate may comprise an embossed pattern obtained by localised expansion of a layer of foam, a phenomenon known as chemical embossing.

It is an aim of the present invention to provide a lenticular plastic floor product, in particular a lenticular plastic 'on roll' floor product and to provide a method for manufacturing such a lenticular plastic floor product.

The lenticular effect can be any lenticular effect considered suitable by the person skilled in the art, such as for instance a 3D effect in an object, varying a color or picture when varying the view angle, a transformation of an object when varying the view angle or a combination of two or more thereof.

The use of lenticular effects in modular articles, such as for instance trading cards, greeting cards, posters or labels, is already known in the art. A modular lenticular article usually comprises a first substrate on which a plurality of images is printed in an interlaced manner, i.e. a lenticular image, and a transparent coating comprising a plurality of peaks and valleys which forms the lenticular lens.

US-B-6831787 describes to use such a modular lenticular article as floor graphics. A coating is provided on top of the lenticular layer, providing the lenticular article with additional chemical and/or mechanical resistance. US-B-6831787 describes that, to obtain a lenticular effect, the index of refraction of the lenticular lens substrate should differ from the index of refraction of the coating. US-B-6831787 does not describe to manufacture the lenticular floor product in one continuous process. Instead, a discontinuous process is described in which a first substrate comprising a lenticular image is fabricated in a first set of steps and a second substrate comprising a lenticular lens is fabricated in a second set of steps, independently from the first substrate, after which the two substrates are laminated together. With a discontinuous process is meant that at least one of the steps of the method is performed independently from the other steps and does not necessarily build on the product obtained in a previous step. Compared to continuous processes, the discontinuous process described in US-B-6831787 is more time consuming and labour intensive, which makes it less suitable for manufacturing "on roll'floor products.

It is further known to introduce lenticular effects in surface coverings making use of discrete raised portions of thixotropic plastic material applied on top of an impervious wear layer. US-B-4816317 and US-B-4816319 describe a surface covering product, such as for instance a vinyl-type floor product, which comprises a substrate, a decorative design provided on the substrate, a first impervious layer wear layer on top of said substrate and design, and a second layer partially covering said first layer and comprising a number of discrete raised portions of thixotropic plastic material. In case the raised elements form convex-shaped lens-like elements, their presence may provide the floor product with a lenticular effect, hereby varying the effect of the underlying design and/or providing a 3-dimensional visual appearance of the design. According to US-B-4816317, to obtain a lenticular effect, said discrete elements should preferably cover substantially 90 percent of the impervious layer. The non-covered areas are filled with an opaque layer. According to US-B-4816317 this surface covering is manufactured as follows. In a first step a release carrier is coated with a PVC plastisol, which is gelled. On top of the gelled plastisol, a multi-colored vinyl ink design is printed. In a next step, a first impervious wear layer is coated on top of said substrate and design, on top of which a rotary screen printer applies raised dot-shaped elements filled with a fill-in thixotropic coating, applied with a knife over roll coater. The resultant product is fused in the oven.

A method as described in US-B-4816317 and US-B-4816319 has the disadvantage that it is cumbersome, expensive and time-consuming. In addition, the lenticular effect of the surface covering obtained with the method of US-B-4816317 and US-B-4816319 is limited and cannot always be guaranteed. This is due to the fact that the lenticular lenses are formed by the dot-shaped elements. However, because the size and shape of these dot-shaped elements and the distance between subsequent dot-shaped elements is difficult to control, the obtained lenticular effect cannot be guaranteed. Furthermore, the need for correlation between the lenticular image and the lenticular lens is not acknowledged and cannot be guaranteed.. The obtained lenticular effect is further minimized by the solid particles, which are usually added to the thixotropic plastic material for the raised elements with the purpose of improving the wear resistance. Those solid particles decrease the transparency of the lenticular lens surface and therewith decrease the lenticular effect.

It is therefore an aim of the present invention to provide an improved process for the continuous manufacturing of a lenticular floor product. It is a further aim of the present invention to provide an alternative lenticular floor product with an enhanced lenticular effect.

This is achieved according to the present invention with a process showing the technical features of the characterising portion of the first claim.

Thereto, the process of the present invention is **characterised in that** it comprises the steps of
(a) providing a flexible substrate,
(b) applying a printing layer on top of said substrate,
(c) printing a plurality of lenticular interlaced images on top of said printing layer,
(d) applying a transparent coating on top of said plurality of lenticular interlaced images,
(e) gelling the layers (a)-(d), in particular the flexible substrate, the printing layer with the plurality of lenticular interlaced images and the transparent layer and
(f) mechanically embossing at least part of the transparent coating to form a surface texture comprising a plurality of peaks and valleys forming a plurality of lenticular lenses for at least a part of said plurality of lenticular images.

In the process of the present invention, the flexible substrate, the printing layer, the plurality of lenticular interlaced images and the transparent coating are applied one after another. By applying the individual layers one after the other and postponing gelling until the transparent coating has been applied in step (d), the flexible substrate, the printing layer, the lenticular image and transparent coating are integrated to form a single unit by gelling. As all steps may be carried out one after the other, whereby a subsequent step builds on a product obtained from the previous step, a continuous process is provided. Continuous process are usually preferred for this type of "on roll" products as they require less manual interference and are faster compared to discontinuous processes.

Compared to the process described in US-B-4816317 and US-B-4816319, in which discrete raised portions of thixotropic plastic material are applied on top of an impervious wear layer to form lenticular lenses, the method according to the present invention provides the plastic floor product with an improved lenticular effect. This is due to the fact that in the method of the present invention, the lenticular lenses are formed by mechanically embossing a transparent coating which has been applied directly on top of the lenticular interlaced image. The absence of the impervious wear layer between the printed layer and the embossed layer, improves the transparency of the lenticular lenses as compared to US-B-4816317 and US-B-4816319 and brings the lenticular effect forward to make it immediately visible. The use of mechanical embossing allows to better control the shape and dimensions of the lenticular lenses and period between subsequent lenticular lenses, as compared to applying raised elements of a thixotropic material. The technique of embossing also permits adjusting the lenticular lenses in such a way that optimum interference occurs with any type of lenticular image considered suitable by the skilled person. Besides that, the lenticular effect may be applied to and observed over the entire floor surface because mechanically embossing allows to uniformly apply the lenticular lenses over the entire printed floor surface. Or else, the lenticular effect may be applied to only part of the floor if so desired.

The method of this invention has the further advantage that use is made of conventional coating techniques which have been used for a number of years already, and thus there is no need for radical changes in the manufacturing site or process.

Steps (a)-(f) can be performed on one or more different production lines, which can be installed on one or more production sites. In case use is made of more than one production line, the intermediate floor product will usually have to be rolled up after having passed the first production line, be transferred to a next production line and be rolled off again to pass the next production line

Preferably, at least steps (a)-(e) are performed on the same production line, resulting in a time efficient method, because the floor product only needs to be rolled up and off once during the entire process.

More preferably, all steps (a)-(f) are performed on the same production line, resulting in an even more time efficient method.

The inventor has further found that the lenticular effect introduced in the plastic floor covering can be further improved in case the lenticular interlaced image is printed with a predetermined image period substantially corresponding with the predetermined lens period with which the transparent top layer is mechanically embossed. With the term "image period" is meant the period (in m) with which the parallel line structure forming the lenticular image is repeated. With the term "lens period" is meant the period (in m) with which the lenticular lenses are repeated. With the term the image period substantially corresponds with the lens period" is meant that the image period and lens period equal each other or deviate from each other with a maximum predetermined deviation limited by the used printing and embossing technique. The predetermined deviation depends on the printing resolution and embossing roller and will preferably be lower than 10%, more preferably lower than 8% and more preferably lower than 4,5%.

The inventor has further found that the lenticular effect introduced in the plastic floor covering can be further improved in case the direction in which the plurality of lenticular images is repeated substantially corresponds with the direction in which the plurality of lenticular lenses is repeated, wherein a predetermined deviation is allowed depending on the size of the image and lens period. The predetermined deviation is preferably lower than 10%, more preferably lower than 8% and more preferably lower than 4,5%.

Preferably, an opaque printing layer is coated on the flexible substrate in the method according to the present invention. The opaque printing layer allows to better view the lenticular interlaced image through the transparent top layer and provides as such in an improved lenticular effect. The printing layer can be made opaque by any method considered suitable by the person skilled in the art, for instance by adding titaniumdioxide to the coating used for the printing layer.

The present invention also relates to a lenticular floor product with an improved lenticular effect, which comprises a flexible substrate, a printing layer provided on top of said substrate and a transparent layer provided on top of said printing layer. The transparent layer comprises an embossed upper surface which comprises a plurality of peaks and valleys forming a plurality of lenticular lenses for the plurality of lenticular images. To this end, the plurality of lenticular images is repeated with a predetermined image period which substantially corresponds with the predetermined lens period with which the plurality of lenticular lenses is repeated.

The invention is further elucidated in the appending figures and description of the figures.
Figure 1 shows step (a) of a preferred embodiment of the present invention.
Figure 2 shows step (f) of a preferred embodiment of the present invention.
Figures 3A and 3B shows a cross section of a lenticular floor product according to a preferred embodiment of the present invention.

In a first step of the method according to the present invention, a flexible substrate is provided. The flexible substrate preferably comprises a flexible base material or structure 1, which may be any material considered suitable by the person skilled in the art, and may be a polymeric sheet, a woven or a non woven fibrous material. Suitable fibrous materials include mineral or natural fibres for example glass, cotton, flax, wood, cellulose fibres. Suitable polymeric fibrous materials include polyesters, polyamide, polypropylene, polyethylene, or mixtures of two or more of these fibres. Other suitable materials include paper or cardboard sheet or felt.

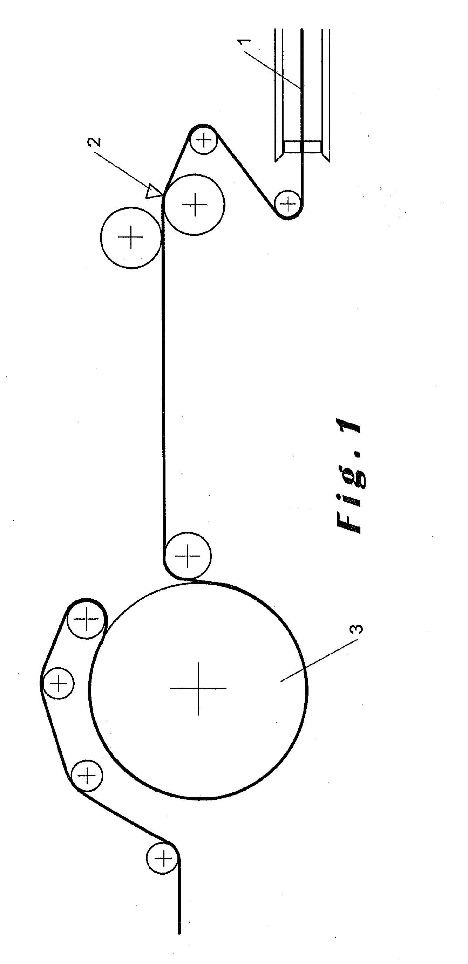

Preferably, the flexible substrate is obtained by impregnating the flexible base structure with a suitable thermoplastic material 2 in a second step as can be seen on figure 1. Preferably use is made of a plastisol, in particular a plastisol which is PVC based. However, acrylic polymers, polyurethane or polyolefin based plastisols may be suitably used as well. Preferably, the plastisol is added in a sufficient amount to flatten the upper surface of the flexible base structure, in such a way that structural characteristics of the flexible base structure can no longer be sensed. A flat upper surface is preferred because it enhances adhesion of the next layer, i.e. the printing layer, to the upper surface of the flexible base. Preferably, the plastisol is added in a sufficient amount to also flatten the bottom surface of the flexible base structure, with the purpose of enhancing adhesion of a reverse layer to the bottom surface of the flexible base. The amount of added plastisol per square meter therefore usually amounts to between 320 and 700 g of plastisol per m² of flexible base material.

In a second step of the method according to this invention, a printing layer 7 is coated on top of the flexible substrate 1, 2. The printing layer can be any type of layer considered suitable by the person skilled in the art on which a decorative design can be printed. The printing layer 7 can be a non-foamable compact layer or a foamable layer which comprises a foaming agent that causes the composition to expand upon heating. The thickness of a non-foamed printing layer preferably varies between 0,10 mm and 0,25 mm, more preferably between 0,15 and 0,25 mm.

In a third step of the method according to the present invention, a design pattern is printed on top of said printing layer. The design pattern comprises at least one, but preferably a plurality of lenticular interlaced images 8. A lenticular interlaced image is a combined image of two or more different images presented in a parallel line structure and is known per se from the state of the art.

Any printing technique as considered suitable by the person skilled in the art can be used. The inventor has found that rotative intaglio printing is in particular suitable for use in the method of this invention. This printing technique is frequently applied in the fabrication of "on roll' floor coverings and particularly suitable for application in the method of the present invention. The printing technique further allows printing a large variety of interlaced images and thus obtaining a large variety of lenticular effects. The technique also allows providing a lenticular image with a small image period Tᵢₘ, the image period being the period with which equal groups of parallel line structures are repeated. However, other printing techniques are allowed, such as for instance digital printing.

Preferably the lenticular image is printed with a resolution between 15 lines/inch and 65 lines/inch, i.e. between 590 lines/m and 2559 lines/m, more preferably between 30 lines/inch and 65 lines/inch, i.e. between 1181 lines/m and 2559 lines/m. A higher printing resolution results in a smaller image period. This can be understood as follows. For a lenticular image consisting of a parallel line structure defined by two lines printed with a resolution of 15 lines/inch, the image period equals 0.13 inch, i.e. 0.0034 m. The same lenticular image printed with a higher resolution of 65 lines/inch, results in an image period of 0.03 inch, i.e. 0.00078 m. A smaller image period is preferred because it may result in a higher frequency of the observed lenticular effect, as a result of which the lenticular effect can be observed under smaller view angles and better approaches an envisaged pattern.

Optionally, the printing ink used to print the lenticular image may comprise a chemical retarder or inhibitor. Such a chemical inhibitor allows certain areas of the printing layer to expand more or less, causing an additional decorative effect.

In a fourth step of the method according to the present invention a transparent layer 9 is coated on top of the printing layer and printed lenticular image. The thickness of the transparent layer may vary between 0,10 mm and 2 mm, preferably between 0,15 and 0,85 mm. The transparent layer is preferably made of a thermoplastic material, which deforms upon heating.

Optionally, a reverse layer 11 is coated on the back of the substrate 1, 2. The reverse layer 11 can be a compact layer or a layer of a foamable material. The reverse layer 11 can provide the floor covering with additional properties, such as additional strength, additional insulation or damping properties.

In a fifth step of the method according to the present invention, the combination of coated layers, being the substrate 1, 2, the printing layer 7, the transparent layer 9 and the reverse layer 11, if any, are gelled together by subjecting them to a thermal treatment. The temperature at which gelling is carried out will be determined by the skilled person, depending on the nature of the materials used. Usually however, gelling will be carried out by heating the material to a temperature of between 150 and 220 °C, preferably between 165 and 210 °C.

In a sixth step of the method according to the present invention the transparent layer 9 is mechanically embossed to form a surface texture comprising a plurality of peaks and valleys forming a plurality of lenticular lenses 10 for at least part of said plurality of lenticular images 8.

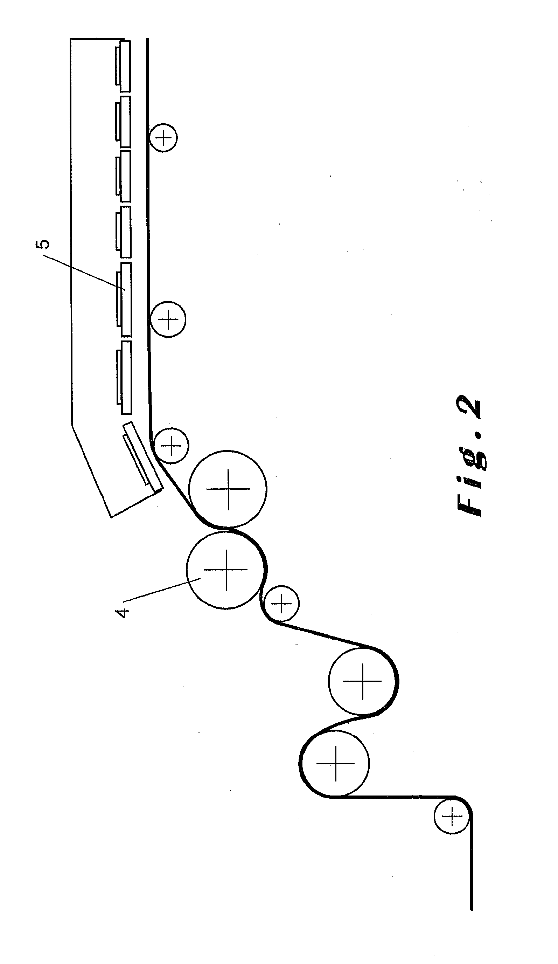

Thereto, as shown in figure 2, the transparent top layer 9 is softened first, preferably by re-heating it, for instance by passing it through an oven, an IR field 5 or the like and then mechanically embossing the softened material with an embossing roller 4. The embossing roll is suitably engraved to obtain the required plurality of peaks and valleys. Mechanical embossing has the advantage over chemical embossing that the depth and sharpness of the emboss can be better controlled as compared to chemical embossing. Mechanical embossing is capable of reproducing subtle, sharp and shallow textures, which is much more difficult to achieve with chemical embossing. The shape, period and depth of the embossing gravures, and thus the shape, period and depth of the lenticular lenses, may vary as considered suitable by the person skilled in the art.

The lenticular lenses 10 may for instance have a triangular shape or a semi-cilindrical shape. A semi-cilindrical shape is preferred since it results in an improved lenticular effect.

Preferably, the image period Tᵢₘ, i.e. the period with which the lenticular interlaced image is repeated, substantially corresponds to the lens period Tₗₑₙₛ, i.e. the period with which the lenticular lens or embossing gravure is repeated. This results in an improved lenticular effect.

Preferably, the mechanical embossing is applied uniformly over the entire surface of the transparent layer.

Preferably, one or more of the applied layers, but preferably all layers, are pre-gelled before passing to the next step. The pre-gelling is preferably done by passing the one or more layers over a gelling drum 3 for a sufficient amount of time and at a suitable temperature, allowing the next step to be performed as is shown in figure 1.

The following ranges are particularly preferred in combination with an impregnated fibre-glass substrate 1, 2. The substrate is preferably pre-gelled between 10s-25s at a temperature between 120°C-160°C. The printing layer 7 is preferably pre-gelled between 10s-25s at a temperature between 140°C-150°C. For the transparent top layer 9 the pre-gelling is preferably done for 10s-25s at a temperature between 145°C-155°C. Other time and temperature ranges are however possible as considered suitable by the person skilled in the art.

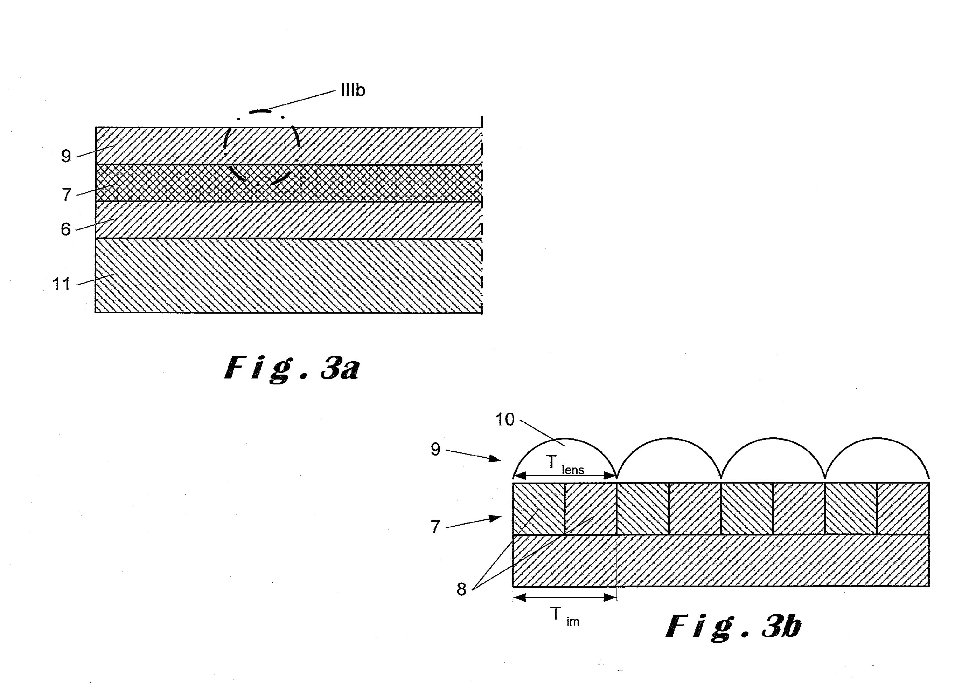

Figure 3a shows a cross section of a preferred embodiment of the lenticular floor product according to the present invention. The lenticular floor product comprises a flexible substrate 6, a reverse layer 11 applied to the bottom of the flexible substrate, a printing layer 7 applied on top of the flexible substrate and a transparent layer 9 applied on top of the printing layer.

A plurality of interlaced lenticular images 8 is printed on top of the printing layer as is shown in figure 3b. The same lenticular image is repeated with an image period Tᵢₘ. The transparent layer 9 is an embossed layer comprising a number of semi-cylindrical undulations. The undulations are repeated with a lens period Tₗₑₙₛ which equals the image period Tᵢₘ. As a result of this correspondence, the undulations function as lenticular lenses 10 for the lenticular images.

Preferably, the lenticular lenses are uniformly provided over the entire surface of the printing layer as is shown on figures 3a and 3b. This allows viewing the lenticular effect over the entire surface of the floor product.

Preferably, an additional top coating is applied on top of the transparent layer to provide the floor product with additional strength and a smooth top surface.

The flexible substrate 6, the reverse layer 11, the printing layer 7, the transparent layer 9 and the top coating layer can be any layer considered suitable by the person skilled in the art for use in floor coverings. In particular, the same materials and thicknesses can be applied as mentioned in the method according to the first aspect of this invention. The materials can for instance be chosen from the group of PVC, optionally mixed with vinyl acetate copolymers, acrylic polymers, polyolefines, polyurethanes, or any other material considered suitable by the person skilled in the art.

## Claims

1. A method for manufacturing a lenticular plastic floor product in a continuous process comprising the following steps:
(a) providing a flexible substrate (1, 2, 6)
(b) applying a printing layer (7) on top of said substrate (1, 2, 6)
(c) printing a design pattern on top of said printing layer (7) **characterized in that** the design pattern comprises a plurality of lenticular interlaced images (8) and **in that** the method further comprises the following steps:
(d) applying a transparent layer (9) on top of said design pattern
(e) gelling the layers (a)-(d), in particular the flexible substrate (1, 2, 6), the printing layer (7) with the plurality of lenticular images (8) and the transparent layer (9) together
(f) mechanically embossing at least part of the transparent layer (9) to form a surface texture comprising a plurality of peaks and valleys forming a plurality of lenticular lenses (10) for at least a part of said plurality of lenticular images (8).

2. A method according to claim 1, **characterized in that** steps (a)-(e) are performed in a single production line.

3. A method according to claim 1, **characterized in that** steps (a)-(f) are performed in a single production line.

4. A method according to any one of the preceding claims, **characterized in that** the plurality of lenticular interlaced images (8) is printed with a predetermined image period and **in that** the plurality of lenticular lenses (10) is repeated with a predetermined lens period, the predetermined lens period substantially corresponding to the predetermined image period.

5. A method according to any one of the preceding claims, **characterized in that** step (a) comprises the steps of (i) providing a flexible base structure (1) (ii) impregnating the flexible base structure with a plastisol coating (2).

6. A method according to any one of the preceding claims, **characterized in that** the printing layer (7) comprises a chemical inhibitor.

7. A method according to any one of the preceding claims, **characterized in that** the plurality of lenticular images (8) are printed using rotative intaglio printing.

8. A method according to any one of the preceding claims, **characterized in that** the printing layer (7) is an opaque layer.

9. A lenticular plastic floor product comprising a flexible substrate (1, 2, 6), a printing layer (7) provided on top of said substrate and comprising a plurality of lenticular interlaced images (8) repeated with a predetermined image period, a transparent layer (9) provided on top of said printing layer comprising a plurality of lenticular lenses (10) repeated with a predetermined lens period, **characterized in that** the predetermined image period substantially corresponds to the predetermined lens period.

10. A lenticular floor product according to claim 9, **characterized in that** the printing layer (7) is an opaque layer.

11. A lenticular floor product according to any one of claims 9-10, **characterized in that** the lenticular floor product further comprises a top coating layer on top of the transparent layer (9) providing the lenticular floor product with a smooth top surface.

12. A lenticular floor product according to any one of claims 9-11, **characterized in that** the lenticular floor product comprises a reverse layer (11) on the bottom of the substrate.
